# EUROPEAN PATENT SPECIFICATION

(11) **EP 4 412 493 B1**
(45) Date of publication and mention of the grant of the patent: **11.11.2026**
(21) Application number: 22786530.0
(22) Date of filing: 28.09.2022
(51) Int. Cl.: A47B 96/02, A47B 96/20

(54) **REINFORCED STRUCTURE**
VERSTÄRKTE STRUKTUR
STRUCTURE RENFORCÉE

(30) Priority: 06.10.2021 IL 28705521
(43) Date of publication of application: 14.08.2024
(60) Divisional application: 25223124.6 / 4 684 694
(73) Proprietor: Keter Home and Garden Products Ltd., 4685205 Herzliya (IL)
(72) Inventor: PALMER, James, Indianapolis, Indiana 46239 (US); EVANS, Richard, Longmeadow, Massachusetts 1106 (US); MUALEM, Dikla, 6083647 Shoham (IL)
(74) Representative: AWA Denmark A/S
(86) International application number: PCT/IL2022/051026
(87) International publication number: WO 2023/058014

(56) References cited:
- JP-B2- 3 646 846
- JP-U- S4 858 327
- US-A1- 2005 040 307

## Description

### TECHNOLOGICAL FIELD

The present invention is generally in the field of reinforced structures. More particularly the present disclosure is concerned with polymeric furniture structure elements and their reinforcement.

### BACKGROUND ART

The following references may be considered to be of relevance as background to the presently disclosed subject matter:
- JP3051780U
- WO2016056912A1
- US6725785
JP S48 58327 U

### BACKGROUND

JP3051780U discloses a base molded from a hard resin such as ABS or polycarbonate, and a frame is formed on a back side of the base and is surrounded by a falling wall and a vertical rib. A reinforcing frame molded from a hard resin such as BS or polycarbonate is fitted inside, and the reinforcing frame is integrally fixed to the base by ultrasonic welding, high frequency welding, or an adhesive, and substantially the entire length of the base, A pair of reinforcing frames are integrated with both side edges of the base. Thus, the strength of the base against bending is improved, and the deformation of the base is prevented.

WO2016056912A1 discloses a shelf for a rolling container, a rolling container provided therewith and a method for transporting and/or storing goods. The shelf according to the invention comprises: - a loading surface suitable for placing goods thereon; - a support plate arranged in use on the underside of the loading surface for the purpose of supporting the loading surface; and - a number of connecting hooks arranged at or close to corner points of the loading surface and configured for attachment to the rolling container, wherein the loading surface and the support plate are connected to each other by means of one or more shaped edges.

US6725785 discloses a protective cover of a grille-shaped article support includes a flat portion for holding articles on, and a surrounding wall j oined to edges of the flat portion. Clipping elements are provided on bottom side of the flat portion, and hooking elements are provided on inner side of the wall. The cover is firmly fitted over the article support with the clipping elements clipping onto corresponding metal bars of the article support, and with the hooking elements hooking onto edges of the article support so that articles can be stably held on the article support.

JP S48 58327 U discloses a reinforced furniture element that is the closest prior art. It comprises a furniture element with two reinforcing elements with a plurality of studs.

It is appreciated that acknowledgement of the above references is not to be inferred as meaning that these are in any way relevant to the patentability of the presently disclosed subject matter.

### GENERAL DESCRIPTION

The invention is directed to a reinforced furniture element as defined in appended claim 1.

The term *'furniture'* as used herein is used in its broad sense and denotes any form of furniture unit and structural element thereof, such as shelving units, tabletops, partition walls, etc.

The arrangement is such that once the reinforcing element is applied and articulated over the furniture element, the reinforcing element becomes secured and solidly fastened thereto, so as to increase the module of elasticity of the reinforced furniture element, thus increasing its bending resistance.

An *effective length* of the studs is defined along a stud, extending between a level of contact between the first face and the first face bearing surface, and the stud bearing surface. An *actual length* of the reinforcing members is defined along throughgoing stud receiving bores, between the first face and the stud bearing surface.

According to a particular example of the disclosure, the effective length is slightly shorter than an actual length, wherein at an assembled position the studs are stressed, so as to apply attracting force to acting in a sense attracting the reinforcing element to bare over the first surface of the furniture element.

Any one or more of the following features, designs and configurations can be applied to the reinforced furniture element and furniture element, as follows:
- the bearing head can be configured with a diameter greater than the diameter of the throughgoing stud receiving bores;
- the bearing head can be deformed into a mushroom-like shape;
- the bearing head can be a compressible mushroom-like snap type head;
- the first face and the second face of the furniture element can be disposed parallel to one another;
- the plurality of studs can extend normal to the first face bearing surface;
- the plurality of studs can extend parallel to one another;
- the reinforcing members can be disposed parallel to one another;
- the reinforced furniture element can be a shelf;
- the first face can be a top face or a bottom face, and the second face can be a bottom face or a top face, respectively;
- the reinforcing element can be applied to either a top face or a bottom face of the furniture element;
- the stud bearing surface can be disposed parallel to the first face;
- the stud bearing surface can be elastic;
- the first face can be configured with depressions for at least partially receiving at least portions of the reinforcing element;
- the first face and the second face can be flat or configured with depressions for receiving at least portions of the reinforcing element;
- the reinforced furniture element can be configured with one or more reinforcing elements, each of which being independently articulated to the furniture element;
- the furniture element and the reinforcing element can be made of the same material, or not;
- the furniture element and the reinforcing element can be made of polymeric materials;
- the furniture element and the reinforcing element can assume different colors and different patterns;
- the bearing head of the studs can be configured into bearing over the stud bearing surface by melting the end portion of the studs, to thereby deformed into a mushroom-like shape having a widened cross section;
- melting the end portion of the studs can be configured with a heat applying device, or by ultrasonic stacking;
- a top surface of the reinforcing element can be flush with a top surface of the furniture element;
- the reinforced furniture element being a shelf;
- the reinforcing element can occupy a major surface of the furniture element;
- the throughgoing stud receiving bores and the respective studs can be of equal length or of different lengths;
- the furniture element and the reinforcing element can be made of thermoplastic material and wherein deforming the studs by ultrasonic welding results in molecular bonding of the studs with the stud bearing surface;
- the furniture element and the reinforcing element can be rigid structures;
- the arrangement is such that at an assembled position configuring the bearing heads for tight bearing over the stud bearing surface takes place simultaneously with applying pressure to tightly adjoin the furniture element and a reinforcing element, so that the studs are stressed.

### BRIEF DESCRIPTION OF THE DRAWINGS

In order to understand the invention and to see how it may be carried out in practice, embodiments will now be described, by way of non-limiting example only, with reference to the accompanying drawings. Features shown in the drawings are meant to be illustrative of only some embodiments of the invention, unless otherwise implicitly indicated. In the drawings like reference numerals are used to indicate corresponding parts, and in which:
**Fig. 1** is a perspective view of a shelving system, comprising several reinforced furniture elements, according to the invention;
**Fig. 2A** is a top perspective view of a reinforced furniture element, namely a shelf of the shelving system seen in Fig. 1;
**Fig. 2B** is a bottom perspective view of the shelf seen in Fig 2A, prior to fastening the studs of the reinforcing elements;
**Fig. 3A** is an exploded view of Fig. 2A (prior to fastening the studs of the reinforcing elements);
**Fig. 3B** is an exploded view of Fig. 2B;
**Fig. 4A** is a section along line IV - IV in Fig. 2A (prior to fastening the studs of the reinforcing elements);
**Fig. 4B** is an enlarged view of the portion marked 4B in Fig. 4A;
**Fig. 4C** is an enlarged view of the portion marked 4C in Fig. 2B;
**Fig. 4D** is a bottom perspective view of the sectioned portion of Fig, 4B;
**Fig. 5A** is a planar side view of the section of Fig. 4A;
**Fig. 5B** is an enlarged view of the portion marked 5B in Fig. 5A;
**Fig. 6A** is a bottom perspective view of the shelf seen in Fig 2A, after to fastening the studs of the reinforcing elements;
**Fig. 6B** is an enlarged view of the portion marked 6B in Fig. 6A;
**Fig. 6C** is a section along line VI - VI in Fig. 6A;
**Fig. 6D** is an enlarged view of the portion marked 6D in Fig. 6C;
**Fig. 7A** is a planar side view of the section of Fig. 6C;
**Fig. 7B** is an enlarged view of the portion marked 7B in Fig. 7A;
**Fig. 7C** is an even enlarged view of the portion marked 7C in Fig. 4B;
**Figs. 8A-8B** are schematic representations illustrating deforming of the studs by ultrasonic welding; and
**Figs. 9A-9E** are schematic representations of the articulation steps.

### DETAILED DESCRIPTION OF EMBODIMENTS

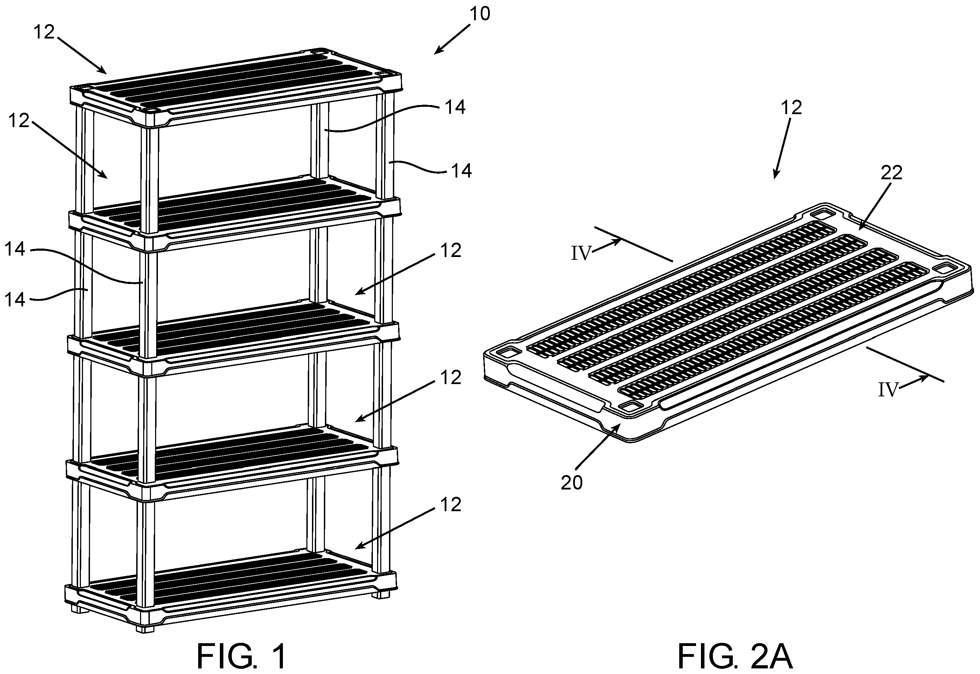

Attention is first directed to Figs. 1 and 2A, illustrating a shelving system generally designated **10,** comprising, in this specific non-limiting example, five spaced apart shelves, each designated **12,** supported over corner support posts **14.** For sake of clarity, the shelving system is a mere example, and each shelve is considered herein as a reinforced furniture element. However, a reinforced furniture element according to the disclosure can be any sort of article and can be of any shape and design.

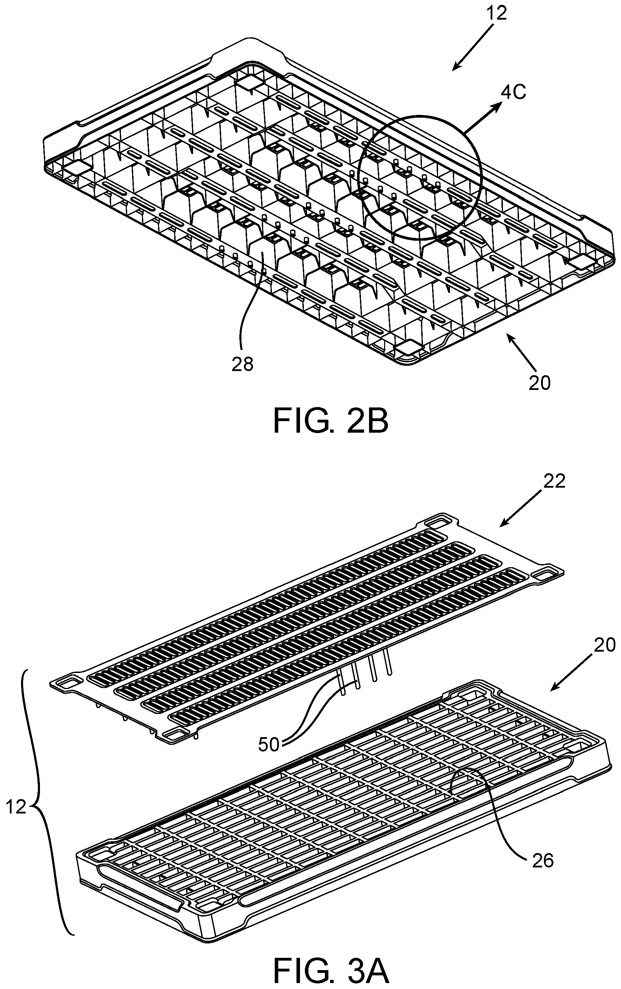

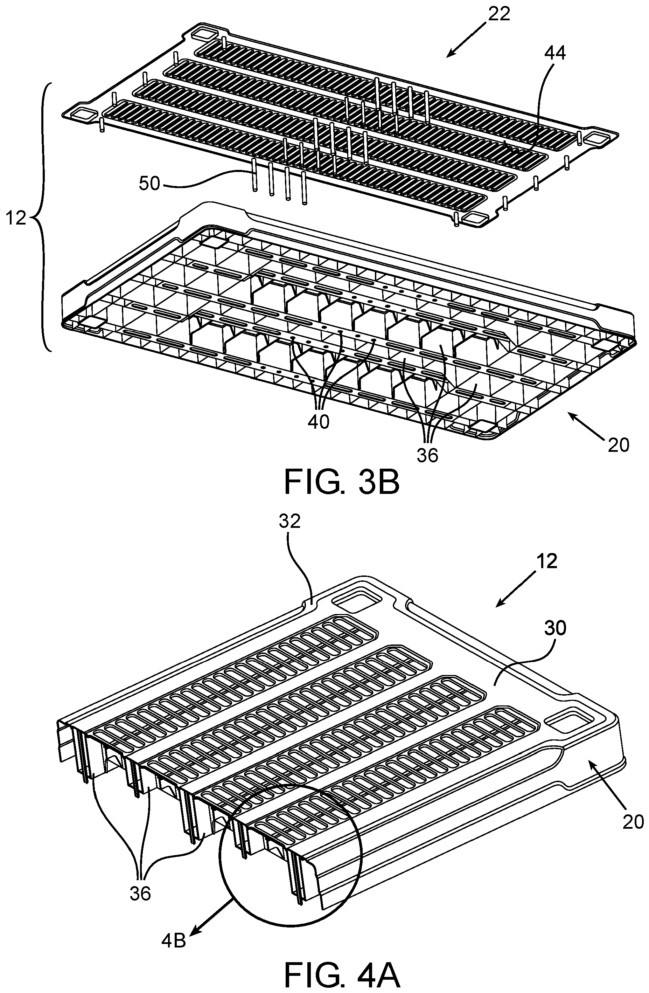

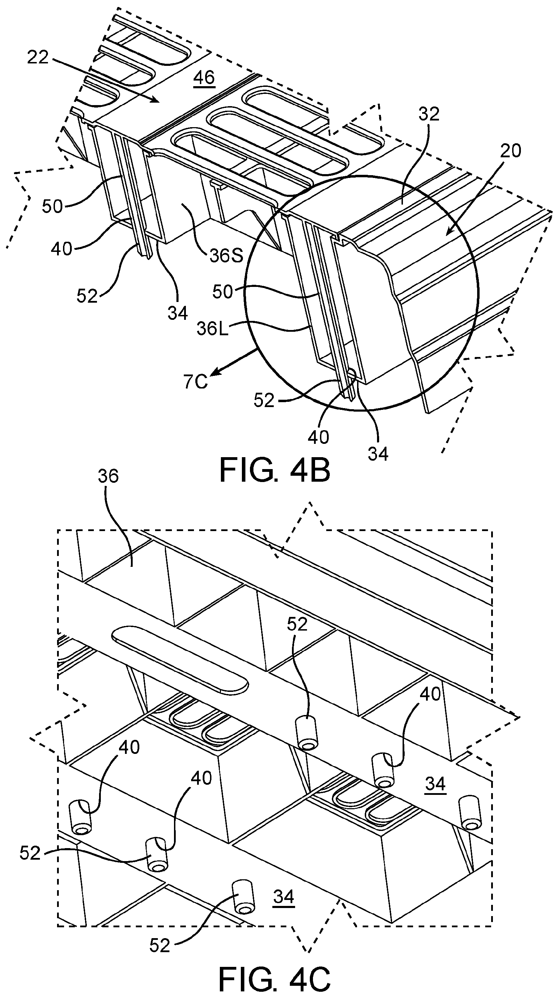

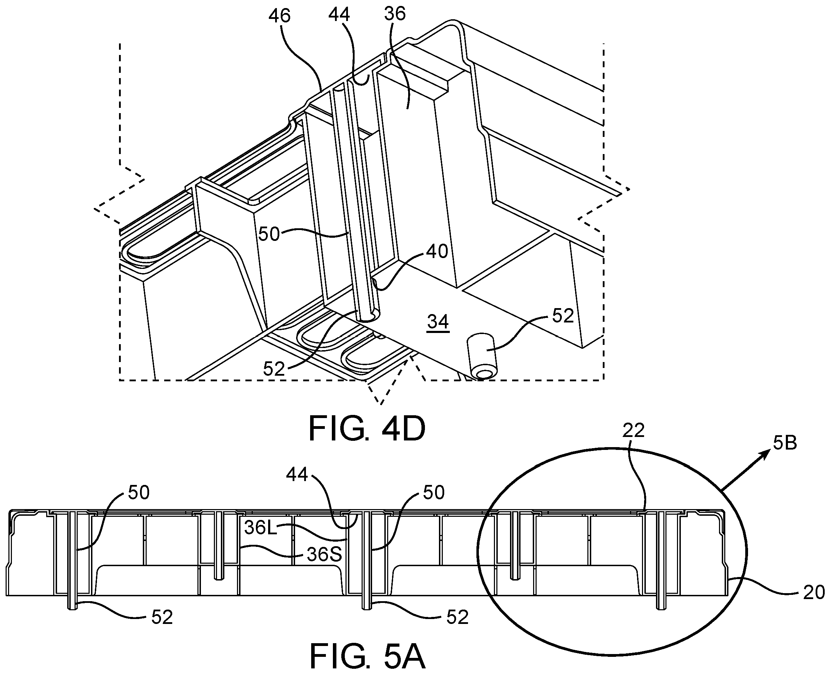

With further reference to Figs. 2B to 5B, and as best seen in Figs. 3A and 3B, the reinforced furniture element, namely each shelf **12,** comprises a furniture element **20** and a reinforcing element **22,** wherein the furniture element **20** is a base shelf structure configured for supporting by the support posts **14,** and the reinforcing element **22** is in the form of a substantially flat member, sized for bearing over the furniture element **20,** as will be explained hereinafter.

Referring in detail first to the furniture element **20,** it is a rigid polymeric rectangle element configured with a first (top) face **26** and a spaced-apart second (bottom) face **28.** The first face **26** is configured with a reinforcing element bearing surface **30** being a major depressed portion of the furniture element **20,** defined by a peripheral rim **32,** and the second face **28** is configured with a stud bearing surface **34.** A plurality of reinforcing members **36,** namely elongate ribs extend between the first face **26** and the second face **28,** with portions of the reinforcing members **36** configured with a plurality of throughgoing stud receiving bores **40,** extending between the first face **26** and the second face **28.**

Turning now to the reinforcing element **22,** it is a substantially flat, rigid polymeric element configured with a first face bearing surface **44** (i.e. the bottom face thereof) and a top surface **46,** with a plurality of rigid studs **50** extending downwards from first face bearing surface **44.** The arrangement is such that when the reinforcing element **22** is placed over the furniture element **20** the studs **50** are disposed in register with locations of the stud receiving bores **40,** and wherein the initial length **Ls** of the studs **50** is greater than the length **L_{B}** of the stud receiving bores **40 (L_{S} > L_{B})** such that at an assembled position, prior to deformation as will be discussed below, a free end **52** of the studs **50** projects below the stud bearing surface **34** of the reinforcing members **36.** It is further seen that the studs **50** are tubular cylindrical elongate members, though other configurations can be possible too (not shown).

It is appreciated that in the particular example the reinforcing members of the furniture element are not of equal height and comprise short reinforcing members **36S** and longer reinforcing members **36L,** this being an example only.

Once the reinforcing element **22** is placed over the furniture element **20,** bearing surface **44** of the reinforcing element **22** bears over the first (top) face **26** of the furniture element **20,** and with the studs **50** received within the respective stud receiving bores **40.** At this position the reinforcing element **22** is received within the depressed portion and the top surface **46** is flush with the peripheral rim **32.**

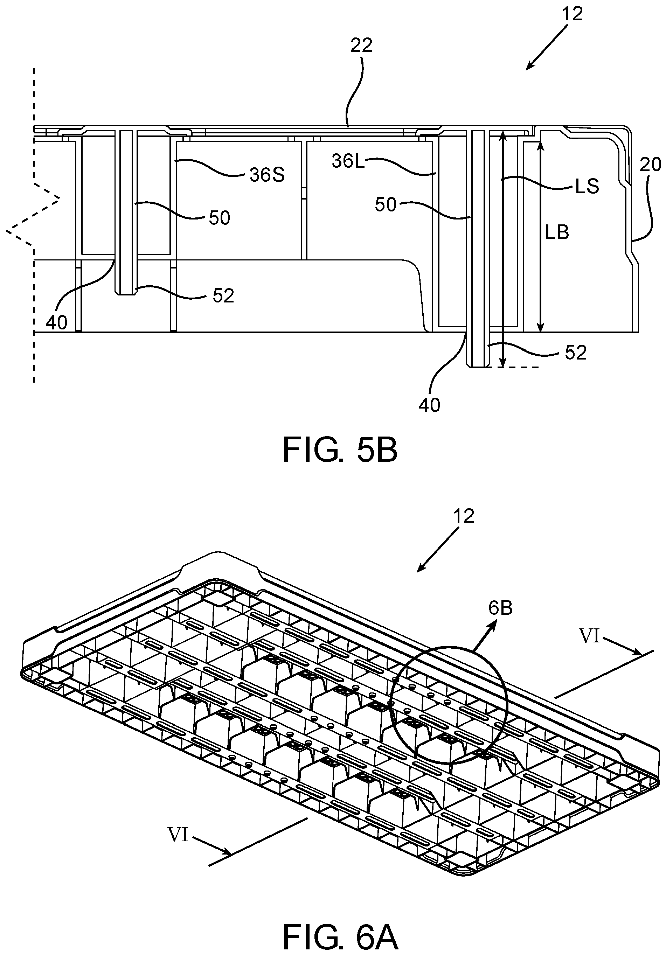

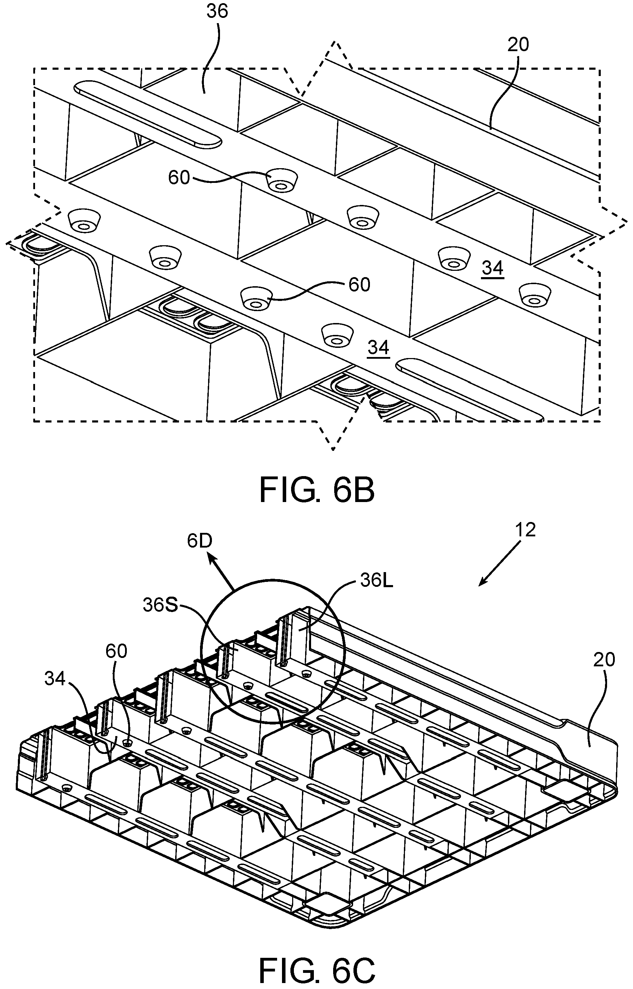

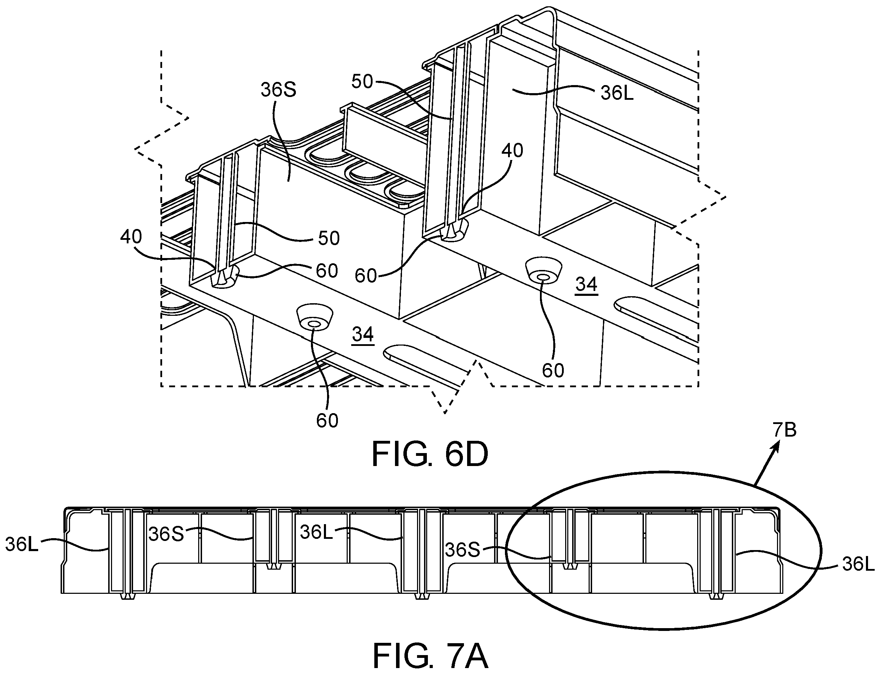

With further reference being made to Figs. 6A-7C, reinforcing the furniture element **20** takes place by deforming the free ends **52** of the studs **50** configured into a mushroom-like bearing head **60,** tightly bearing over the stud bearing surface **34** of the reinforcing members **36.**

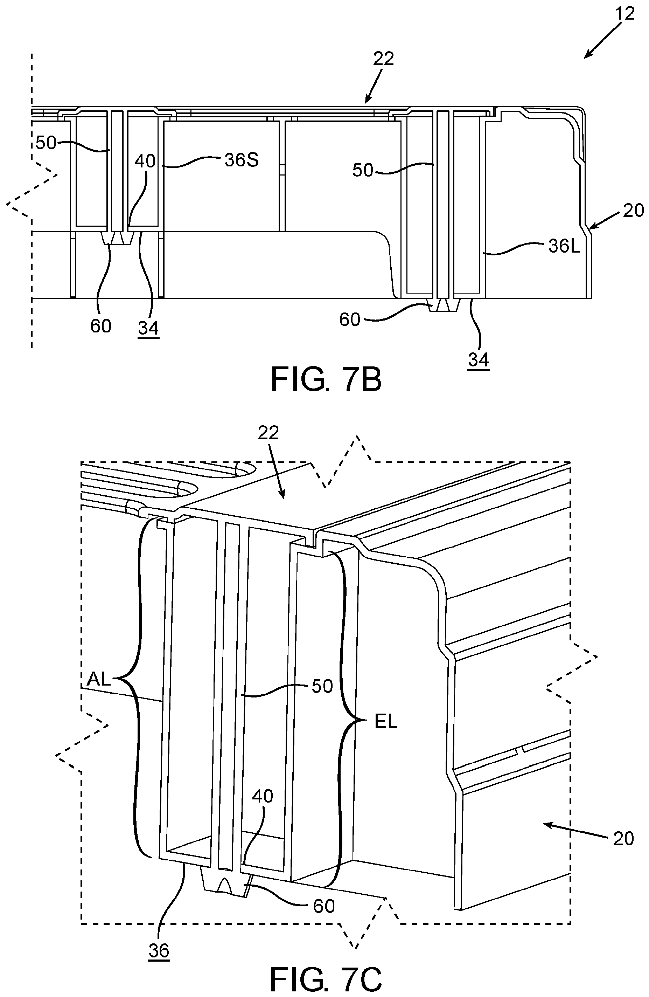

The arrangement is such that configuring the bearing heads **60** for tight bearing over the stud bearing surface **34** takes place simultaneously with applying pressure to tightly adjoin the furniture element **20** and a reinforcing element **22,** so that the studs **50** are stressed. Thus, as illustrated in Fig. 7C, at the assembled position of the reinforced furniture element (shelf **12),** an effective length **E_{L}** of the studs is very slightly shorter than an actual length **A_{L}** of the reinforcing members, **E_{L}** < **A_{L}**. Effective length **E_{L}** is defined along a stud; extending between a level of contact between the first face and first face bearing surface, and the stud bearing surface); and actual length **A_{L}** is defined is defined along throughgoing stud receiving bores, between the first face and the stud bearing surface.

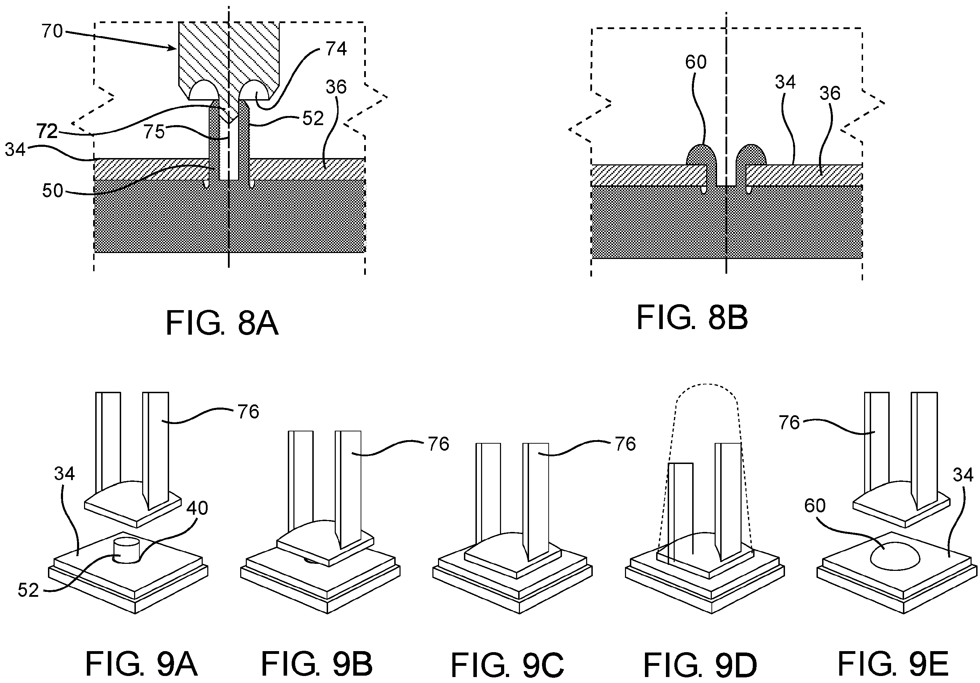

Turning now to Figs. 8A and 8B there are represented examples of manufacturing steps of a reinforced furniture element according to the disclosure. Referring first to Fig. 8A, a sonotrode **70** is applied to the free end **52** of a stem **50,** said sonotrode **70** configured with a penetrating head **72** configured for introducing into a lumen **75** of a stem end **52,** and having a shaped head **74** configured for stacking, i.e. applying heat to the free end **52** thus melting it for reshaping it in conformance with the shape of the head **74,** so that upon cooling the bearing end assumes a mushroom-like shape bearing head **60** bearing against the stud bearing surface **34,** as in Fig. 8B.

Figs. 9A-9E illustrate consecutive steps of heat stacking of the free ends **52** of the studs 50 into mushroom-like shape bearing heads **60.** In the first step shown in Fig. 9A, the positioning of the free ends **52** through bores **40** is confirmed. Then, a heated anvil/iron **76** (same shape as sosotrode **70** as in Fig. 8A) is advanced to the free end **52** of studs **50** (Fig. 9B) and heat is applied thereto (Fig. 9C), deforming the free ends into mushroom-like shape bearing heads **60** bearing against the stud bearing surface **34,** water which the bearing heads **60** are cooled by applying chill to the anvil **76** (Fig. 9D), to assumes a mushroom-like shape bearing head **60** bearing against the stud bearing surface **34,** as shown in Fig. 9E.

Whilst in the illustrated examples the bearing head is mushroom-like shaped configured through a heat deforming process, it is appreciated that other arrangements are possible to for stressing the studs within the stud receiving bores at the assembled position. One such example is pre-forming the studs with a snap-type mushroom like free end configurable for introducing through the bore and configurable for spontaneous sap engagement upon penetrating through a bottom end of the reinforcing member **36** in a snap-type fashion.

## Claims

1. A reinforced furniture element (12) comprising a furniture element (20) and two or more reinforcing elements (22),
said furniture element (20) is configured with a first face (26) and a spaced apart second face (28), one or more reinforcing members (36) extending between the first face and the second face, a plurality of throughgoing stud receiving bores (40) extending through the one or more reinforcing members between the first face and the second face; said first face is configured with a reinforcing element bearing surface (30), and the second face is configured with a stud bearing surface (34);
each of the two or more reinforcing elements (22) is configured with a first face bearing surface (44), and a plurality of studs (50) extending from first face bearing surface, said studs are disposed in register with locations of at least some of the stud receiving bores (40), and a free end (52) of the studs (50) is configurable with a bearing head (60) for tight bearing over the stud bearing surface (34), and
**characterised in that** said
two or more reinforcing elements are configured at either the first or second faces of the furniture element, as well as at side faces thereof.

2. The reinforced furniture element of claim 1, wherein, once the reinforcing element is applied and articulated over the furniture element, the reinforcing element becomes secured and solidly fastened thereto, so as to increase the module of elasticity of the reinforced furniture element to thereby increase the bending resistance of the reinforced furniture element.

3. The reinforced furniture element of claim 1, wherein the stud is stressed so as to apply attracting force to acting in a sense attracting the reinforcing element to bare over the first surface of the furniture element.

4. The reinforced furniture element of claim 1, wherein the bearing head is configured with a diameter greater than a diameter of the throughgoing stud receiving bores, optionally wherein the bearing head is deformed into a mushroom-like shape or is a compressible mushroom-like snap type head.

5. The reinforced furniture element of claim 1, wherein the plurality of studs extend normal to the first face bearing surface and parallel to one another.

6. The reinforced furniture element of claim 1, wherein the reinforced furniture element is a shelf.

7. The reinforced furniture element of claim 1, wherein the reinforcing element is applied to both of a top face and a bottom face of the furniture element.

8. The reinforced furniture element of claim 1, wherein the stud bearing surface is disposed parallel to the first face.

9. The reinforced furniture element of claim 1, wherein the stud bearing surface is elastic.

10. The reinforced furniture element of claim 1, wherein the first face is configured with depressions for at least partially receiving at least portions of the reinforcing element.

11. The reinforced furniture element of claim 1, wherein the first face and the second face are configured with depressions for receiving at least portions of the reinforcing element.

12. The reinforced furniture element of claim 1, wherein the furniture element and the reinforcing element are made of polymeric material.

13. The reinforced furniture element of claim 1, wherein the bearing head of the studs is configured into bearing over the stud bearing surface by melting the end portion of the studs, to thereby deform into a mushroom-like shape having a widened cross section.

14. The reinforced furniture element of claim 1, wherein a top surface of the reinforcing element is flush with a top surface of the furniture element.

15. The reinforced furniture element of claim 1, wherein the throughgoing stud receiving bores and the respective studs are of equal length or of different lengths.

## Patentansprüche

1. Verstärktes Möbelelement (12), das ein Möbelelement (20) und zwei oder mehr Verstärkungselemente (22) umfasst,
wobei das Möbelelement (20) mit einer ersten Fläche (26) und einer beabstandeten zweiten Fläche (28) ausgelegt ist, wobei sich ein oder mehrere Verstärkungselemente (36) zwischen der ersten Fläche und der zweiten Fläche erstrecken, wobei sich mehrere durchgehende Zapfenaufnahmebohrungen (40) durch das eine oder die mehreren Verstärkungselemente zwischen der ersten Fläche und der zweiten Fläche erstrecken; wobei die erste Fläche mit einer Verstärkungselementlagerfläche (30) ausgelegt ist und die zweite Fläche mit einer Zapfenlagerfläche (34) ausgelegt ist;
wobei jedes der zwei oder mehr Verstärkungselemente (22) mit einer Lagerfläche auf der ersten Fläche (44) und mehreren Zapfen (50) ausgelegt ist, die sich von der Lagerfläche auf der ersten Fläche erstrecken, wobei die Zapfen in Deckung mit Positionen von zumindest einigen der Zapfenaufnahmebohrungen (40) angeordnet sind, und wobei ein freies Ende (52) der Zapfen (50) mit einem Lagerkopf (60) zur dichten Auflage über der Zapfenlagerfläche (34) auslegbar ist, und
**dadurch gekennzeichnet, dass** die zwei oder mehr Verstärkungselemente entweder an der ersten oder zweiten Fläche des Möbelelements sowie an Seitenflächen davon ausgelegt sind.

2. Verstärktes Möbelelement nach Anspruch 1, wobei, sobald das Verstärkungselement angewendet und über dem Möbelelement angelenkt ist, das Verstärkungselement daran gesichert und fest befestigt wird, um das Elastizitätsmodul des verstärkten Möbelelements zu erhöhen, um dadurch den Biegewiderstand des verstärkten Möbelelements zu erhöhen.

3. Verstärktes Möbelelement nach Anspruch 1, wobei der Zapfen so gespannt ist, dass er eine Anziehungskraft ausübt, um in einem Sinn zu wirken, der das Verstärkungselement anzieht, um über der ersten Oberfläche des Möbelelements freizuliegen.

4. Verstärktes Möbelelement nach Anspruch 1, wobei der Lagerkopf mit einem Durchmesser ausgelegt ist, der größer als ein Durchmesser der durchgehenden Zapfenaufnahmebohrungen ist, wobei optional der Lagerkopf in eine pilzartige Form verformt ist oder ein komprimierbarer pilzartiger Schnappkopf ist.

5. Verstärktes Möbelelement nach Anspruch 1, wobei sich die mehreren Zapfen senkrecht zu der Lagerfläche auf der ersten Fläche und parallel zueinander erstrecken.

6. Verstärktes Möbelelement nach Anspruch 1, wobei das verstärkte Möbelelement ein Regal ist.

7. Verstärktes Möbelelement nach Anspruch 1, wobei das Verstärkungselement sowohl auf eine Oberseite als auch auf eine Unterseite des Möbelelements angewendet ist.

8. Verstärktes Möbelelement nach Anspruch 1, wobei die Zapfenlagerfläche parallel zu der ersten Fläche angeordnet ist.

9. Verstärktes Möbelelement nach Anspruch 1, wobei die Zapfenlagerfläche elastisch ist.

10. Verstärktes Möbelelement nach Anspruch 1, wobei die erste Fläche mit Vertiefungen zum zumindest teilweisen Aufnehmen von zumindest Teilen des Verstärkungselements ausgelegt ist.

11. Verstärktes Möbelelement nach Anspruch 1, wobei die erste Fläche und die zweite Fläche mit Vertiefungen zum Aufnehmen zumindest von Teilen des Verstärkungselements ausgelegt sind.

12. Verstärktes Möbelelement nach Anspruch 1, wobei das Möbelelement und das Verstärkungselement aus polymerem Material hergestellt sind.

13. Verstärktes Möbelelement nach Anspruch 1, wobei der Lagerkopf der Zapfen dazu ausgelegt ist, über der Zapfenlagerfläche durch Schmelzen des Endabschnitts der Zapfen zu liegen, um sich dadurch in eine pilzartige Form mit einem erweiterten Querschnitt zu verformen.

14. Verstärktes Möbelelement nach Anspruch 1, wobei eine obere Oberfläche des Verstärkungselements bündig mit einer oberen Oberfläche des Möbelelements ist.

15. Verstärktes Möbelelement nach Anspruch 1, wobei die durchgehenden Zapfenaufnahmebohrungen und die jeweiligen Zapfen gleich lang oder unterschiedlich lang sind.

## Revendications

1. Élément de meuble renforcé (12) comprenant un élément de meuble (20) et deux éléments de renforcement ou plus (22),
ledit élément de meuble (20) est configuré avec une première face (26) et une seconde face (28) espacée, un ou plusieurs organes de renforcement (36) s'étendant entre la première face et la seconde face, une pluralité d'alésages de réception de goujon traversant (40) s'étendant à travers les un ou plusieurs organes de renforcement entre la première face et la seconde face ; ladite première face est configurée avec une surface d'appui d'élément de renforcement (30), et la deuxième face est configurée avec une surface d'appui de goujon (34) ;
chacun des deux éléments de renforcement ou plus (22) est configuré avec une surface d'appui de première face (44) et une pluralité de goujons (50) s'étendant à partir de la surface d'appui de première face, lesdits goujons sont disposés en alignement avec des emplacements d'au moins certains des alésages de réception de goujon (40), et une extrémité libre (52) des goujons (50) peut être configurée avec une tête d'appui (60) pour un appui étanche sur la surface d'appui de goujon (34), et **caractérisé en ce que** lesdits deux éléments de renforcement ou plus sont configurés au niveau soit de la première, soit de la seconde face de l'élément de meuble, ainsi qu'au niveau de faces latérales de celui-ci.

2. Élément de meuble renforcé selon la revendication 1, dans lequel, une fois que l'élément de renforcement est appliqué et articulé sur l'élément de meuble, l'élément de renforcement devient fixé et solidement assujetti à celui-ci, de manière à augmenter le module d'élasticité de l'élément de meuble renforcé pour augmenter de ce fait la résistance à la flexion de l'élément de meuble renforcé.

3. Élément de meuble renforcé selon la revendication 1, dans lequel le goujon est contraint de manière à appliquer une force d'attraction pour agir dans un sens attirant l'élément de renforcement à nu sur la première surface de l'élément de meuble.

4. Élément de meuble renforcé selon la revendication 1, dans lequel la tête d'appui est configurée avec un diamètre supérieur à un diamètre des alésages de réception de goujon traversant, facultativement dans lequel la tête d'appui est déformée en une forme de champignon ou est une tête compressible du type à encliquetage en forme de champignon.

5. Élément de meuble renforcé selon la revendication 1, dans lequel la pluralité de goujons s'étendent perpendiculairement à la surface d'appui de première face et parallèlement les uns aux autres.

6. Élément de meuble renforcé selon la revendication 1, l'élément de meuble renforcé étant une étagère.

7. Élément de meuble renforcé selon la revendication 1, l'élément de renforcement étant appliqué à la fois sur une face supérieure et sur une face inférieure de l'élément de meuble.

8. Élément de meuble renforcé selon la revendication 1, dans lequel la surface d'appui de goujon est disposée parallèlement à la première face.

9. Élément de meuble renforcé selon la revendication 1, dans lequel la surface d'appui de goujon est élastique.

10. Élément de meuble renforcé selon la revendication 1, dans lequel la première face est configurée avec des creux pour recevoir au moins partiellement au moins des portions de l'élément de renforcement.

11. Élément de meuble renforcé selon la revendication 1, dans lequel la première face et la seconde face sont configurées avec des creux pour recevoir au moins des portions de l'élément de renforcement.

12. Élément de meuble renforcé selon la revendication 1, dans lequel l'élément de meuble et l'élément de renforcement sont en matériau polymère.

13. Élément de meuble renforcé selon la revendication 1, dans lequel la tête d'appui des goujons est configurée pour s'appuyer sur la surface d'appui de goujon par fusion de la portion d'extrémité des goujons, pour de ce fait se déformer en une forme de champignon ayant une section transversale élargie.

14. Élément de meuble renforcé selon la revendication 1, dans lequel une surface supérieure de l'élément de renforcement affleure une surface supérieure de l'élément de meuble.

15. Élément de meuble renforcé selon la revendication 1, dans lequel les alésages de réception de goujon traversant et les goujons respectifs sont de longueur égale ou de longueurs différentes.
